(19) Europäisches Patentamt
European Patent Office
Office européen des brevets

(11) EP 3 018 796 A1

(12) EUROPEAN PATENT APPLICATION
published in accordance with Art. 153(4) EPC

(43) Date of publication:
11.05.2016 Bulletin 2016/19

(51) Int Cl.:
H02J 50/00 (2016.01)     B60L 11/18 (2006.01)
H02J 7/00 (2006.01)

(21) Application number: 14820577.6

(22) Date of filing: 19.06.2014

(86) International application number:
PCT/JP2014/003297

(87) International publication number:
WO 2015/001744 (08.01.2015 Gazette 2015/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 01.07.2013 JP 2013137967

(71) Applicant: Panasonic Intellectual Property
Management Co., Ltd.
Osaka-shi, Osaka 540-6207 (JP)

(72) Inventors:
• KOIZUMI, Masayoshi
  Osaka-shi, Osaka 540-6207 (JP)
• OHASHI, Osamu
  Osaka-shi, Osaka 540-6207 (JP)
• NISHIO, Tsuyoshi
  Osaka-shi, Osaka 540-6207 (JP)
• ASAOKA, Noriaki
  Osaka-shi, Osaka 540-6207 (JP)

(74) Representative: Schwabe - Sandmair - Marx
Patentanwälte Rechtsanwalt
Partnerschaft mbB
Stuntzstraße 16
81677 München (DE)

(54) POWER FEED DEVICE AND METHOD FOR ACQUISITION OF FREQUENCY CHARACTERISTICS

(57) Inverter (203) supplies an alternating current (AC) power of a constant voltage or a constant current to power supply coil (104a) while varying a drive frequency. Frequency characteristic acquisition unit (105) acquires frequency characteristics of a current value associated with a current flowing through power supply coil (104a) that receives the supplied AC power, or a voltage value associated with a voltage applied to power supply coil (104a).

FIG. 2

EP 3 018 796 A1

## Description

TECHNICAL FIELD

The present invention relates to a power feed device of a wireless power supply system, and a method for acquisition of frequency characteristics.

BACKGROUND ART

In the related art, a wireless power supply system has been known which charges a storage battery mounted on a vehicle by using a power feed device on the ground. A wireless power supply system has been known which acquires frequency characteristics of transmission efficiency between a power supply side and a power receiving side, and supplies power at a drive frequency near a resonance frequency, based on the acquired frequency characteristics (for example, PTL 1).

In PTL 1, the power supply side supplies power while varying a frequency, and acquires data of power received by a power reception coil at that time, from the power receiving-side. Then, the power supply side calculates transmission efficiency of power based on the supplied power and the acquired reception power, and acquires frequency characteristics of the transmission efficiency.

Citation List

Patent Literature

PTL 1: Japanese Patent Unexamined Publication No. 2011-142769

SUMMARY OF THE INVENTION

TECHNICAL PROBLEM

In PTL 1, it is necessary to acquire data of the received power from the power receiving side in order to acquire the frequency characteristics of the transmission efficiency. In order to acquire the data of the received power, it is necessary to use wireless communication, and this increases the number of processing steps at the time of acquiring the frequency characteristics between the power supply side and the power receiving side. Further, since time lag occurs in acquisition of the data of the received power, the speed for changing the frequency is restricted, resulting in a problem in that the acquisition processing speed of the frequency characteristics is reduced.

An object of the present invention is to provide a power feed device and a method for acquisition of frequency characteristics, which are capable of rapidly acquiring the frequency characteristics of transmission efficiency with a simple process.

SOLUTIONS TO PROBLEM

A power feed device according to the present invention includes a power supply coil that supplies power to an external power reception coil, by electromagnetic action, a power supply unit that supplies an alternating current (AC) power to the power supply coil, while varying a drive frequency, and an acquisition unit that acquires frequency characteristics of a current value associated with a current flowing through the power supply coil, or a voltage value associated with a voltage applied to the power supply coil, at a time when receiving the supplied AC power.

A method for acquisition of frequency characteristics according to the present invention includes supplying AC power to a power supply coil that supplies power to an external power reception coil, by electromagnetic action, while varying a drive frequency, and acquiring frequency characteristics of a current value associated with a current flowing through the power supply coil, or a voltage value associated with a voltage applied to the power supply coil, at a time when receiving the supplied AC power.

ADVANTAGEOUS EFFECT OF INVENTION

According to the present invention, it is possible to rapidly acquire the frequency characteristics of transmission efficiency between a power supply coil and a power reception coil, with a simple process.

BRIEF DESCRIPTION OF DRAWINGS

[FIG. 1] FIG. 1 is a block diagram illustrating a configuration of a charging system in an exemplary embodiment of the present invention.
[FIG. 2] FIG. 2 is a block diagram illustrating configurations of a power supply unit and a power supply-side controller in the exemplary embodiment of the present invention.
[FIG. 3] FIG. 3 is a flowchart illustrating a method for acquisition of frequency characteristics in the exemplary embodiment of the present invention.
[FIG. 4] FIG. 4 is a flowchart illustrating a method for acquisition of frequency characteristics in the exemplary embodiment of the present invention.
[FIG. 5] FIG. 5 is a diagram illustrating a relationship between transmission efficiency and frequency, and a diagram illustrating a relationship between power supply-side coil current and frequency.
[FIG. 6] FIG. 6 is a block diagram illustrating configurations of a power supply unit and a power supply-side controller in Modification example 1 of the power feed device according to the exemplary embodiment.
[FIG. 7] FIG. 7 is a block diagram illustrating configurations of a power supply unit and a power supply-side controller in Modification example 2 of the power feed device according to the exemplary embodiment.

[FIG. 8] FIG. 8 is a block diagram illustrating configurations of a power supply unit and a power supply-side controller in Modification example 3 of the power feed device according to the exemplary embodiment.

[FIG. 9] FIG. 9 is a block diagram illustrating configurations of a power supply unit and a power supply-side controller in Modification example 4 of the power feed device according to the exemplary embodiment.

[FIG. 10] FIG. 10 is a flowchart illustrating a method for acquisition of frequency characteristics at a time of preliminary power supply in Modification example 4 according to the exemplary embodiment.

[FIG. 11] FIG. 11 is a block diagram illustrating configurations of a power supply unit and a power supply-side controller in Modification example 5 of the power feed device according to the exemplary embodiment.

DESCRIPTION OF EMBODIMENTS

Hereinafter, embodiments of the present invention will be described in detail with reference to the drawings.

<Configuration of charging system>

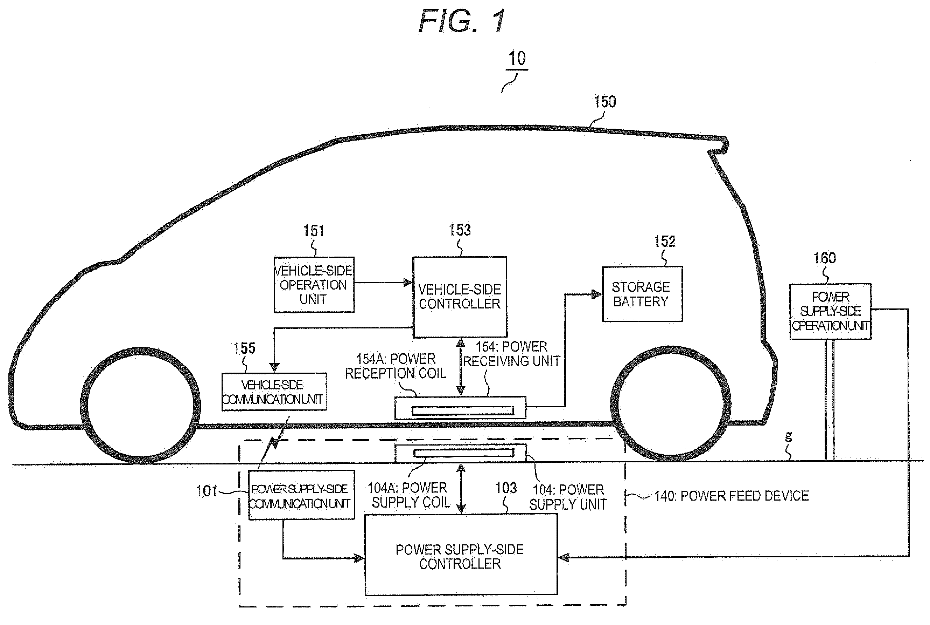

The configuration of charging system 10 according to an exemplary embodiment of the present invention will be described with reference to FIG. 1. FIG. 1 is a block diagram illustrating the configuration of the charging system in the exemplary embodiment of the present invention.

Charging system 10 includes power feed device 140, vehicle 150, and power supply-side operation unit 160.

In addition, FIG. 1 illustrates a power supply-possible state in which power supply coil 104a and power reception coil 154a face each other.

Power feed device 140 is installed on or embedded in the ground such that power supply unit 104 is disposed from ground surface g. Power feed device 140, for example, is provided in a parking space, and faces power receiving unit 154 and supplies power to power receiving unit 154, during parking of vehicle 150. Here, examples of power supply include preliminary power supply that supplies a small amount of power to power receiving unit 154 before supplying power to storage battery 152, and main power supply that supplies a large amount of power in order to supply power to storage battery 152. In addition, in the following description, those that are simply described as "power supply" are intended to include both the preliminary power supply and the main power supply. Further, the configuration of power feed device 140 will be described later.

Vehicle 150 is, for example, a vehicle traveling by the power of storage battery 152, such as a hybrid electric vehicle (HEV), a plug-in electric vehicle (PEV), or an electric vehicle (EV). Further, the configuration of vehicle 150 will be described later in detail.

Power supply-side operation unit 160 outputs a power supply start signal indicating the start of power supply or a power supply stop signal indicating the stop of power supply to power feed device 140, in response to an operation from the outside.

<Configuration of vehicle>

The configuration of vehicle 150 according to the first exemplary embodiment of the present invention will be described with reference to FIG. 1.

Vehicle 150 is mainly configured with vehicle-side operation unit 151, storage battery 152, vehicle-side controller 153, power receiving unit 154, and vehicle-side communication unit 155.

Vehicle-side operation unit 151 receives various operations from the driver, and outputs a signal corresponding to the received operation to vehicle-side controller 153.

Storage battery 152 stores the power supplied from power feed device 140 through power receiving unit 154.

Vehicle-side controller 153 controls power receiving unit 154 and vehicle-side communication unit 155 so as to perform various processes associated with power supply or various processes associated with power supply stop, based on various signals that are input from vehicle-side operation unit 151. Vehicle-side controller 153 detects reception power received by power reception coil 154a, and outputs the detection result of the reception power to vehicle-side communication unit 155, as reception power information. Although described later, it is not necessary to transmit reception power information, in a process of acquiring the frequency characteristics of the transmission efficiency.

Power receiving unit 154 includes power reception coil 154a. Power reception coil 154a is supplied with power by receiving power from power supply coil 104a of power supply unit 104 by electromagnetic induction. Power receiving unit 154 supplies power that has been received by power reception coil 154a to storage battery 152, in response to the control of vehicle-side controller 153.

Vehicle-side communication unit 155 exchanges various types of information required for power supply, with power supply-side communication unit 101. For example, vehicle-side communication unit 155 transmits the reception power information that is input from vehicle-side controller 153, to power supply-side communication unit 101. Vehicle-side communication unit 155 generates a power reception enable signal to allow charging or a power reception disable signal to not allow charging, in response to the control of vehicle-side controller 153, and transmits the generated power reception enable signal or the generated power reception disable signal, to power supply-side communication unit 101. Here, the power reception disable signal is transmitted when storage battery 152 is in a state of being fully charged.

<Configuration of power feed device>

The configuration of power feed device 140 according to the exemplary embodiment of the present invention will be described with reference to FIG. 1.

Power feed device 140 is mainly configured with power supply-side communication unit 101, power supply-side controller 103, and power supply unit 104.

Power supply-side communication unit 101 exchanges various types of information required for power supply, with vehicle-side communication unit 155. Power supply-side communication unit 101 receives the power reception enable signal or the power reception disable signal from vehicle-side communication unit 155. Power supply-side communication unit 101 outputs the received power reception enable signal or the received power reception disable signal, to power supply-side controller 103.

Power supply-side controller 103 controls power receiving unit 154 so as to perform various controls regarding power supply.

For example, when the power supply start signal is input from power supply-side operation unit 160, power supply-side controller 103 controls power supply unit 104 so as to perform the preliminary power supply. Further, when the power reception enable signal is input from power supply-side communication unit 101, power supply-side controller 103 controls power supply unit 104 so as to start the main power supply.

Further, power supply-side controller 103 acquires the frequency characteristics of power supply unit 104, and performs a process of calculating the frequency characteristics of transmission efficiency of the power between power supply unit 104 and power receiving unit 154. The process will be described later. Power supply-side controller 103 sets the frequency at which the transmission efficiency is the maximum, based on the acquired frequency characteristics of the transmission efficiency, for example, during the main power supply, and controls power supply unit 104 so as to perform power supply at the set frequency.

When the power supply stop signal is input from power supply-side operation unit 160, or when the power reception disable signal is input from power supply-side communication unit 101, power supply-side controller 103 controls power supply unit 104 so as not to start the power supply or so as to stop the power supplying. Further, the configuration of power supply-side controller 103 will be described in detail later.

Power supply unit 104 is driven in response to the control of power supply-side controller 103, and supplies power to power receiving unit 154, for example, by electromagnetic action such as an electromagnetic induction method or a magnetic resonance method.

<Configuration of power supply unit>

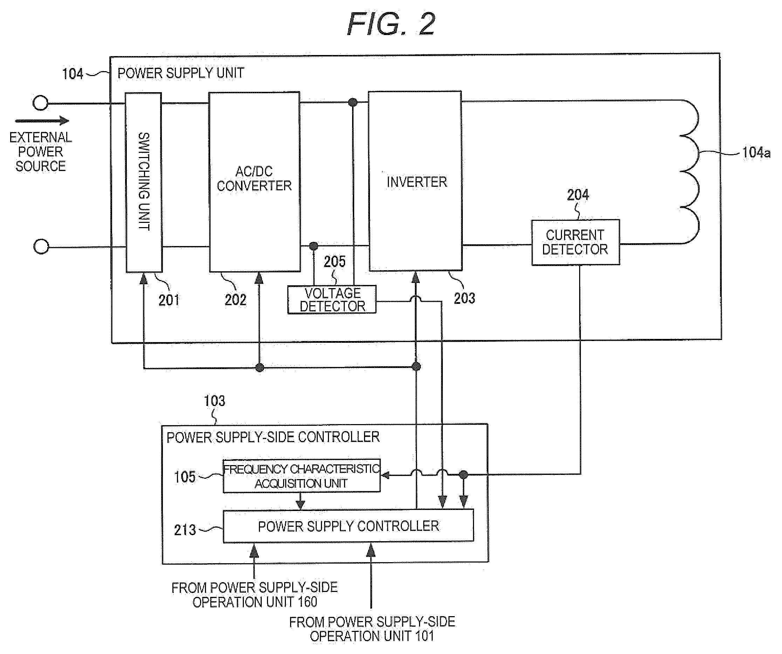

The configuration of power supply unit 104 according to the exemplary embodiment of the present invention will be described in further detail with reference to FIG. 2. FIG. 2 is a block diagram illustrating configurations of the power supply unit and the power supply-side controller in the exemplary embodiment of the present invention.

Power supply unit 104 includes switching unit 201, AC/DC converter 202, inverter 203, current detector 204, voltage detector 205, and power supply coil 104a.

Switching unit 201 opens or closes the connection between the external power source (external AC power source) and AC/DC converter 202, in response to the control of power supply controller 213.

AC/DC converter 202 converts AC electrical energy supplied from the external power source into DC electrical energy, and supplies the DC electrical energy to inverter 203. The output voltage of AC/DC converter 202 may be fixed to a predetermined specific voltage, or may be varied by the control of power supply controller 213.

Inverter 203 converts the DC power supplied from ACIDC converter 202 to the AC power, and supplies the AC power to power supply coil 104a. Inverter 203 can change the frequency and the magnitude of the output power, in response to the control of power supply controller 213. For example, inverter 203 is controlled to output a low level of power during the preliminary power supply, and is controlled to output a large level of power during the main power supply.

Current detector 204 measures the current value of the AC power supplied from inverter 203 to power supply coil 104a, and outputs the measurement result of the current value to frequency characteristic acquisition unit 105 and power supply controller 213.

Voltage detector 205 measures the voltage value of the DC power supplied from AC/DC converter 202 to inverter 203, and outputs the measurement result of the voltage value to power supply-side controller 103 (specifically, power supply controller 213).

Power supply coil 104a supplies power to power receiving unit 154 by receiving the AC power supplied from inverter 203. Power supply coil 104a performs the main power supply with power larger than in the preliminary power supply.

<Configuration of power supply-side controller>

The configuration of power supply-side controller 103 according to the exemplary embodiment of the present invention will be described with reference to FIG.

2.

Power supply-side controller 103 is mainly configured with frequency characteristic acquisition unit 105, and power supply controller 213.

Frequency characteristic acquisition unit 105 acquires the frequency characteristics of power supply coil 104a, specifically, the frequency characteristics of the value of the current flowing through power supply coil 104a when power supply coil 104a receives the supplied AC power. The frequency characteristics represent a relationship between the frequency of the AC power supplied to power supply coil 104a and the target current value.

As will be described later in modification examples, frequency characteristic acquisition unit 105 may acquire the frequency characteristics of a current value associated with a current flowing through power supply coil 104a when power supply coil 104a receives the supplied AC power. Alternatively, frequency characteristic acquisition unit 105 may acquire frequency characteristics of a voltage value associated with a voltage applied to power supply coil 104a when power supply coil 104a receives the supplied AC power.

Here, the current value associated with the current flowing through power supply coil 104a is a value of a current flowing through another location, which affects (is correlated with) the current that flows directly to power supply coil 104a. In other words, the associated current value is the value of the current that flows directly to power supply coil 104a, or a value of a current flowing through another location, which is capable of estimating the value of the current that flows directly to power supply coil 104a. The specific location will be described later in modification examples.

Further, the voltage value associated with the voltage applied to power supply coil 104a is a value of a voltage applied to another location, which affects (is correlated with) the voltage applied directly to power supply coil 104a. In other words, the associated voltage value is the value of the voltage applied directly to power supply coil 104a, or the value of the voltage applied to another location, which is capable of estimating the value of the voltage applied directly to power supply coil 104a. The specific location will be described later in modification examples.

Further, frequency characteristic acquisition unit 105 functions as a calculator that calculates the frequency characteristics of the transmission efficiency between power supply coil 104a and power reception coil 154a, based on the acquired frequency characteristics. Frequency characteristic acquisition unit 105 calculates the frequency characteristics of the transmission efficiency, without using data of the power value supplied to power reception coil 154a. The calculation method will be described in detail later.

Further, frequency characteristic acquisition unit 105 functions as a calculator that calculates the resonance frequency between power supply coil 104a and power reception coil 154a, based on the calculated frequency characteristics of the transmission efficiency. Frequency characteristic acquisition unit 105 calculates the resonance frequency by extracting a frequency at which the transmission efficiency becomes the maximum, from the frequency characteristics of the transmission efficiency.

In addition, the calculation of the frequency characteristics of the transmission efficiency and the calculation of the resonance frequency may be performed by power supply controller 213, or may be performed by a dedicated arithmetic processor that is provided.

Frequency characteristic acquisition unit 105 outputs the acquired frequency characteristics of power supply coil 104a, the calculated frequency characteristics of the transmission efficiency, or the calculated resonance frequency, to power supply controller 213.

Information on a voltage and information on a current are input respectively from voltage detector 205 and current detector 204 to power supply controller 213. Further, an operation signal is input from power supply-side operation unit 160 to power supply controller 213, and communication data is input from power supply-side communication unit 101. Power supply controller 213 performs turn-on/turn-off control of switching unit 201, the driving control of AC/DC converter 202, and the driving control of inverter 203, based on these types of input information, and supplies AC power to power supply coil 104a.

For example, when a supply start signal is input from power supply-side operation unit 160, power supply controller 213 controls AC/DC converter 202 and inverter 203 such that power for preliminary power supply is supplied to power supply coil 104a in order to start the preliminary power supply. When the power reception enable signal is input from power supply-side communication unit 101, power supply controller 213 controls AC/DC converter 202 and inverter 203 so as to output power larger than in the preliminary power supply. Thus, power supply unit 104 performs the main power supply with power larger than in the preliminary power supply.

Power supply controller 213 can use a frequency at which the transmission efficiency becomes the maximum during supply, based on the information acquired from frequency characteristic acquisition unit 105, as the drive frequency of inverter 203.

Further, power supply controller 213 controls inverter 203 so as to change the frequency of AC power and controls AC/DC converter 202 so as to supply DC power by the constant voltage (effective voltage), during the frequency characteristic acquisition process of power supply coil 104a.

After starting supply, when the supply stop signal is input from power supply-side operation unit 160, or when the power reception disable signal is input from power supply-side communication unit 101, power supply controller 213 opens switching unit 201 and enters a state of being non-connected with inverter 203.

Further, power supply controller 213 may calculate the frequency characteristics of the transmission efficiency and the power value of the supplied power from power supply coil 104a at the time of main power supply, based on the measurement result of the voltage value input from voltage detector 205 and the measurement result of the current value input from current detector 204, at the time of main power supply.

<Method for acquiring frequency characteristics at the time of preliminary power supply>

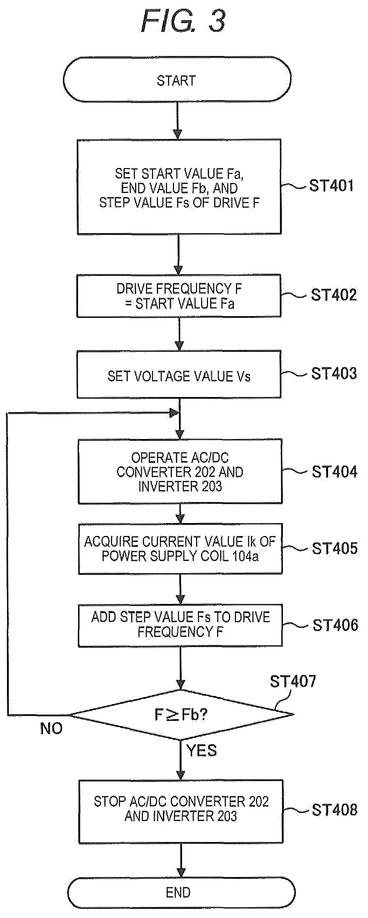

A method for acquisition of frequency characteristics at the time of preliminary power supply in the exemplary embodiment of the present invention will be described with reference to FIG. 3. FIG. 3 is a flowchart illustrating the method for acquisition of frequency characteristics in the exemplary embodiment of the present invention.

Power supply-side controller 103 performs a frequency characteristic acquisition process of FIG. 3, at the time of the preliminary power supply.

When the frequency characteristic acquisition process is started, first, power supply controller 213 acquires and sets start value Fa, end value Fb, and step value Fs of drive frequency F, that are pre-set drive frequency information (step ST401).

Next, power supply controller 213 sets start value Fa as drive frequency F (step ST402).

Next, power supply controller 213 sets the voltage value Vs of the power that is output from AC/DC converter 202 (step ST403).

Next, power supply controller 213 operates AC/DC converter 202 such that the output of AC/DC converter 202 becomes the voltage value Vs, and operates inverter 203 at drive frequency Fa (step ST404). Here, power supply controller 213 does not perform control of adjusting the output current of inverter 203, for example, such as driving inverter 203 at a predetermined duty ratio.

Next, current detector 204 detects the current value Ik, and frequency characteristic acquisition unit 105 acquires the detected current value Ik (step ST405).

Next, power supply controller 213 adds step value Fs to drive frequency F (step ST406).

Next, power supply controller 213 determines whether or not drive frequency F is end value Fb or more (step ST407).

When drive frequency F is less than end value Fb (step ST407: NO), power supply controller 213 returns to the process of step ST404.

Meanwhile, when drive frequency F is end value Fb or more (step ST407: Yes), power supply controller 213 opens switching unit 201 to stop AC/DC converter 202 and inverter 203 (step ST408).

By a loop process of steps ST404 to ST407, frequency characteristic acquisition unit 105 can acquire the data of a plurality of current values Ik between the drive frequencies Fa and Fb at a small step interval Fs.

These pieces of data become the frequency characteristics data of the current value Ik.

Further, in FIG. 3, step value Fs is added to drive frequency F in step ST406 by setting end value Fb to the higher frequency side than start value Fa, but step value Fs may be subtracted from drive frequency F in step ST406 by setting end value Fb to the lower frequency side than start value Fa. Further, drive frequency F may be raised or lowered.

<Method for acquiring frequency characteristics at the time of main power supply>

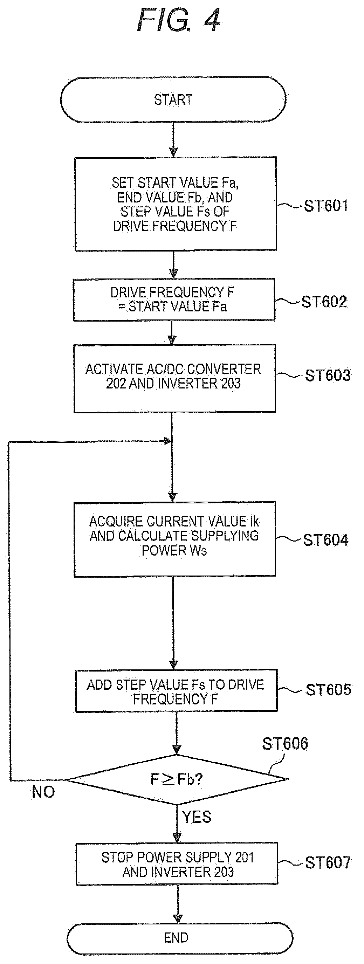

A method for acquisition of frequency characteristics at the time of main power supply in the exemplary embodiment of the present invention will be described with reference to FIG. 4. FIG. 4 is a flowchart illustrating the method for acquisition of frequency characteristics in the exemplary embodiment of the present invention.

At the time of main power supply, power supply-side controller 103 may acquire the frequency characteristics by performing the frequency characteristic acquisition process of FIG. 4. The frequency characteristic acquisition process at the time of main power supply can be used, for example, in a case of checking whether or not a frequency at which the transmission efficiency becomes the maximum at the time of main power supply changes, and modifying the drive frequency.

First, if the frequency characteristic acquisition process of FIG.4 is started, power supply controller 213 acquires and sets start value Fa, end value Fb, and step value Fs of drive frequency F, that is the pre-set drive frequency information (step ST601).

Next, power supply controller 213 sets start value Fa as drive frequency F (step ST602).

Next, power supply controller 213 closes switching unit 201, and starts AC/DC converter 202 and inverter 203 (step ST603). The output voltage of AC/DC converter 202 is set to the voltage at the time of main power supply, and inverter 203 operates at the set drive frequency F and at a predetermined duty ratio for the time of main power supply.

Next, power supply controller 213 calculates the supplying power Ws, based on the measurement result of the voltage value input from voltage detector 205 and the measurement result of the current value input from current detector 204 (step ST604). Further, since the supplying power Ws is the power at the time of main power supply, it is the power larger than in the preliminary power supply. In this case, frequency characteristic acquisition unit 105 acquires the current value Ik detected by current detector 204.

Next, power supply controller 213 adds step value Fs to drive frequency F (step ST605). The actual drive frequency of inverter 203 varies depending on the setting change in drive frequency F.

Next, power supply controller 213 determines whether or not drive frequency F is end value Fb or more (step ST606).

When drive frequency F is less than end value Fb (step ST606: NO), power supply controller 213 returns to the process of step ST604.

Meanwhile, when drive frequency F is end value Fb or more (step ST606: YES), power supply controller 213 stops inverter 203 (step ST607).

By a loop process of steps ST604 to ST606, frequency characteristic acquisition unit 105 can acquire the data of a plurality of current values Ik between the drive frequencies Fa and Fb at a small step interval Fs. These pieces of data become the frequency characteristics data of the current value Ik at a state close to the main power supply.

Further, in FIG. 4, step value Fs is added to drive frequency F in step ST605 by setting end value Fb to the higher frequency side than start value Fa, but step value Fs may be subtracted from drive frequency F in step ST605 by setting end value Fb to the lower frequency side than start value Fa. Further, drive frequency F may be raised or lowered.

<Relationship between the frequency characteristics of the transmission efficiency and the frequency characteristics of the current value of the power supply coil>

The frequency characteristics of the transmission efficiency and the frequency characteristics of the current value or the voltage value represent the same characteristics. The reason will be described below.

In charging system 10, a coupling coefficient varies under the influence of a distance and an axis deviation between power supply coil 104a and power reception coil 154a. If the transmission efficiency is assumed as $\eta$ and the current value of power supply coil 104a is assumed as $I_1$, $\eta$ and $I_1$ can be expressed as Equation (1) as a function including the drive frequency f and the coupling coefficient k.

$$\begin{cases} \eta = X(k, \alpha f) \\ I_1 = V \times Y(k, f) \end{cases} \qquad - \; (1)$$

Here,

V: power source voltage
$\alpha$: constant

When the power source voltage V is constant, and the distance and the axis deviation between power supply coil 104a and power reception coil 154a do not vary, the coupling coefficient becomes constant (k=constant), the transmission efficiency $\eta$ and the current value $I_1$ of power supply coil 104a are respectively uniquely determined for the drive frequency f. It has been seen that there are two resonance frequencies $f_1$ and $f_2$ (local maximum point) in the characteristics of the transmission efficiency $\eta$ in a state where the coupling coefficient is high (see Equation (2) below). Similarly, it has been seen that there are two resonance frequencies $f_3$ and $f_4$ (local maximum point) in the characteristics of the current value $I_1$ of power supply coil 104a (see Equation (2) below). In other words, there is a correlation between the current value $I_1$ and the transmission efficiency $\eta$.

$$\begin{cases} \dfrac{\partial \eta}{\partial f}\Big|_{f=f1,f2}=0 \\[2ex] \dfrac{\partial I_1}{\partial f}\Big|_{f=f3,f4}=0 \end{cases} \qquad - \; (2)$$

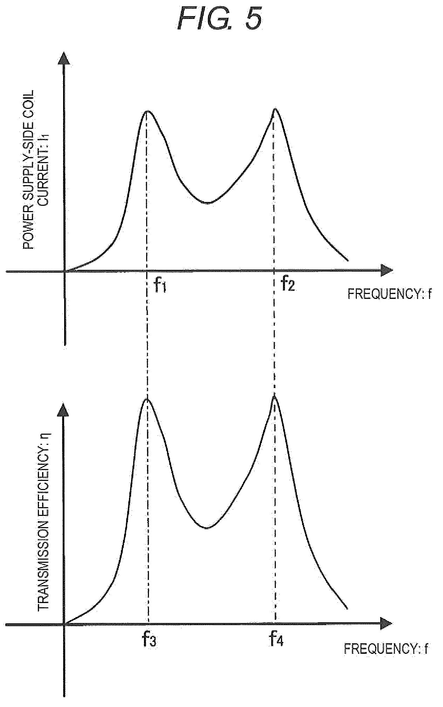

FIG. 5 illustrates a relationship between transmission efficiency and a frequency, and a relationship between a power supply-side coil current (a current flowing through power supply coil 104a) and a frequency.

As illustrated in FIG. 5, it can be confirmed that f1=f3 and f2=f4, by performing circuit simulation using an equivalent circuit model, and it can be understood that the detection of two resonance frequencies can be performed by using either the transmission efficiency $\eta$ or the value $I_1$ of the current flowing through power supply coil 104a. Further, the value $I_1$ of the current flowing through power supply coil 104a has a correlation with the input current value of AC/DC converter 202 that converts AC electrical energy supplied from the external power source into DC electrical energy and supplies the DC electrical energy to inverter 203, or the output current value of AC/DC converter 202. In other words, the value $I_1$ of the current flowing through power supply coil 104a can be estimated from the input current value of AC/DC converter 202 and the output current value of AC/DC converter 202. Thus, the frequency characteristics of the transmission efficiency may be obtained using a current value that is measured between switching unit 201 and AC/DC converter 202, or between AC/DC converter 202 and inverter 203.

With respect to the characteristics illustrated in Equation (1), Equation (2), and FIG. 5, similar correlation is also established between the transmission efficiency $\eta$ and the voltage value applied to power supply coil 104a. The characteristics are also established in the voltage value applied to power supply coil 104a, or the output voltage value of AC/DC converter 202 that converts AC electrical energy supplied from the external power source into DC electrical energy and supplies the DC electrical energy to inverter 203.

In the configuration of a power feed device in the related art, in order to obtain the frequency characteristics of the transmission efficiency, vehicle 150 needs to wirelessly transmit the power value flowing through power reception coil 154a to power feed device 140, and power feed device 140 needs to calculate the transmission efficiency.

In contrast, in the present embodiment, frequency characteristic acquisition unit 105 calculates the frequency characteristics of the transmission efficiency, using the aforementioned relationship, from the frequency characteristics of the current value $I_k$.

In the present embodiment, since frequency characteristics similar to the transmission efficiency are obtained in the value of the current flowing through power supply coil 104a, it is not necessary to perform wireless communication with vehicle 150, and the frequency characteristics of the value of the current flowing through power supply coil 104a are obtained by only a process in power feed device 140. Therefore, the arithmetic processing can be simplified in the case of using the frequency characteristics of the current value flowing through or the voltage value applied to power supply coil 104a, as compared to the case of using the frequency characteristics of the transmission efficiency.

<Effects of the present embodiment>

According to the present embodiment, the frequency characteristics of the current value $I_k$ flowing through power supply coil 104a is acquired in the preliminary power supply or the main power supply. Power feed device 140 calculates the frequency characteristics of the transmission efficiency between power supply coil 104a and power reception coil 154a, based on the acquired frequency characteristics. Further, power feed device 140 acquires the frequency characteristics of the transmission efficiency by only the process on the power supply-side. Thus, unlike the related art, a process of exchanging data of the reception power at power reception coil 154a with the power receiving-side is omitted. Since the process of communicating data of the reception power is omitted, the process of changing the drive frequency of inverter 203 can be performed relatively rapidly, and the frequency characteristic acquisition process of the transmission efficiency can be performed at a high speed.

Further, in the present embodiment, since power feed device 140 acquires the frequency characteristics of the value of the current flowing through power supply coil 104a, and determines the resonance point, it is possible to determine whether or not power reception coil 154a is present in a position opposing power supply coil 104a, based on the number of peaks of the current value of power supply coil 104a.

Further, according to the present embodiment, since the power supply-side acquires the frequency characteristics of the transmission efficiency, and performs control so as to perform the main power supply at a frequency of the local maximum value of the frequency characteristics of the transmission efficiency, it is possible to efficiently perform the main power supply in a short time.

Further, in the present embodiment, frequency characteristic acquisition unit 105 acquires the frequency characteristics of the value of the current flowing through power supply coil 104a that is controlled to be a predetermined voltage value (a constant voltage value), but may acquire the frequency characteristics of the current value of each portion having a correlation with the current directly flowing through power supply coil 104a.

For example, frequency characteristic acquisition unit 105 may be configured to acquire the frequency characteristics of the input current value of AC/DC converter 202 or the output current value of AC/DC converter 202. Further, in this case, the voltage controlled to be a predetermined value may be a voltage value directly applied to power supply coil 104a (for example, a voltage effective value is controlled to be constant), or the output voltage value of AC/DC converter 202. Further, when performing an operation for correlation of the input voltage and the output voltage of the AC/DC, an input voltage value of AC/DC converter 202 can be employed for the voltage controlled to a predetermined value.

Further, frequency characteristic acquisition unit 105 may acquire the frequency characteristics of the voltage value associated with the voltage applied to power supply coil 104a at the time when power supply coil 104a is driven at a predetermined current (for example, a current effective value is constant).

For example, power supply controller 213 performs control such that any one of the effective value of the current directly flowing through power supply coil 104a, the effective value of the input current of AC/DC converter 202, or the output current of AC/DC converter 202 is a predetermined current. Then, in this driving control, frequency characteristic acquisition unit 105 may acquire the output voltage value of AC/DC converter 202, or the frequency characteristics of the output voltage value of inverter 203.

Hereinafter, some of these modification examples will be described with reference to the drawings.

<Modification examples of embodiment>

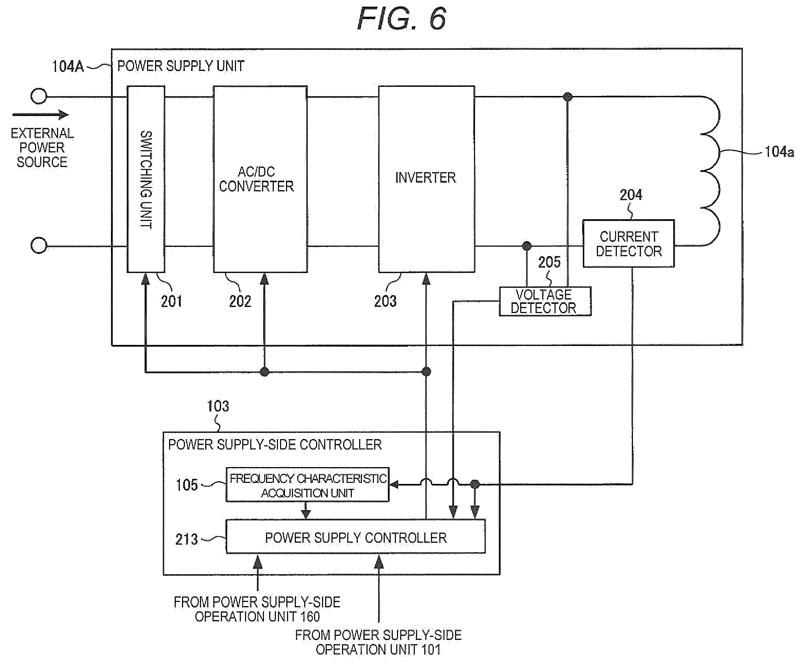

Modification examples of the present embodiment will be described with reference to FIGS. 6 to 11. Since a charging system in the modification examples of the present embodiment has the same configuration as in FIG. 2 except for the arrangement positions of current detector 204 and voltage detector 205 in power supply unit 104 of power feed device 140, and the current value or the voltage value that is input to frequency characteristic acquisition unit 105, the entire description thereof will be omitted. Further, as the configuration of power supply-side controller 103 in the present embodiment is the same as in power supply-side controller 103 in the embodiment above described, the description thereof will be omitted.

<Modification example 1>

FIG. 6 is a block diagram illustrating configurations of a power supply unit and a power supply-side controller in Modification example 1 of the power feed device according to the present embodiment.

In power supply unit 104A illustrated in FIG. 6, voltage detector 205 is not provided between AC/DC converter 202 and inverter 203, but rather is provided between inverter 203 and power supply coil 104a.

Frequency characteristic acquisition unit 105 acquires the frequency characteristics of the current value directly flowing through power supply coil 104a, which is controlled to be a predetermined voltage (for example, a voltage effective value is constant), using the current value and the voltage value that are detected by current detector 204 and voltage detector 205.

<Modification example 2>

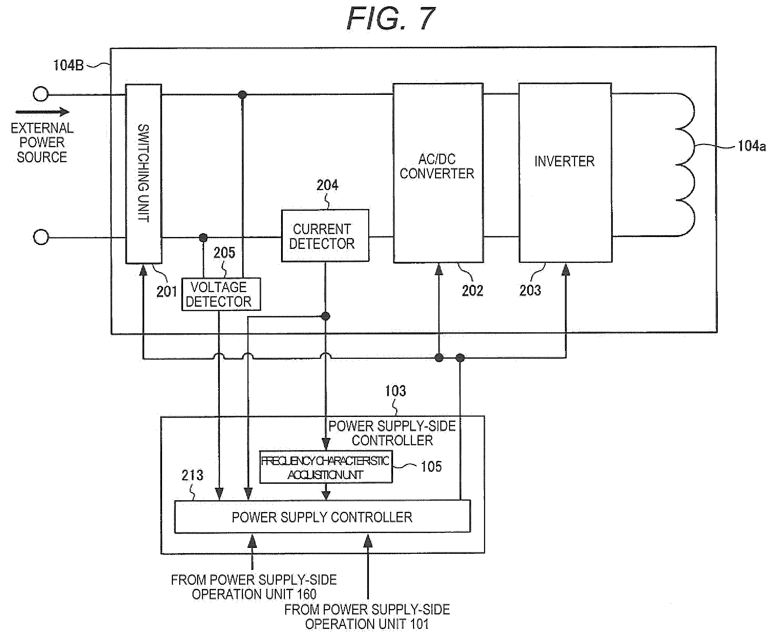

FIG. 7 is a block diagram illustrating configurations of a power supply unit and a power supply-side controller in Modification example 2 of the power feed device according to the present embodiment.

Power supply unit 104B illustrated in FIG. 7 is different from power supply unit 104 of power feed device 140 of the embodiment in that current detector 204 and voltage detector 205 are provided between switching unit 201 and AC/DC converter 202.

Current detector 204 detects the input current value of AC/DC converter 202.

Voltage detector 205 detects the input voltage value of AC/DC converter 202.

In this case, power supply controller 213 controls power supply unit 104 such that the input voltage of AC/DC converter 202 becomes a predetermined voltage, by varying the drive frequency of inverter 203. Then, frequency characteristic acquisition unit 105 acquires the frequency characteristics of the input current of AC/DC converter 202. It is also possible to obtain the frequency characteristics of the transmission efficiency between power supply unit 104 and power receiving unit 154 from the frequency characteristics.

<Modification example 3>

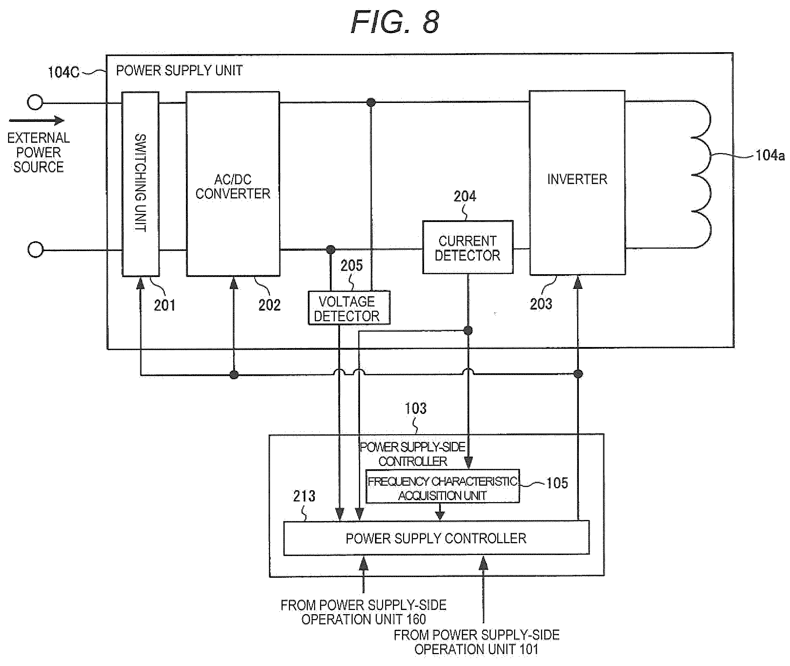

FIG. 8 is a block diagram illustrating configurations of a power supply unit and a power supply-side controller in Modification example 3 of the power feed device according to the present embodiment.

Power supply unit 104C illustrated in FIG. 8 is different from power supply unit 104 of power feed device 140 of the embodiment in that current detector 204 and voltage detector 205 are provided between AC/DC converter 202 and inverter 203.

Current detector 204 detects the output current value of AC/DC converter 202.

Voltage detector 205 detects the output voltage value of AC/DC converter 202.

In this case, power supply controller 213 controls power supply unit 104 such that the output voltage of AC/DC converter 202 becomes a predetermined voltage, by varying the drive frequency of inverter 203. Then, frequency characteristic acquisition unit 105 acquires the frequency characteristics of the output current of AC/DC converter 202. It is also possible to obtain the frequency characteristics of the transmission efficiency between power supply unit 104 and power receiving unit 154 from the frequency characteristics.

<Modification example 4>

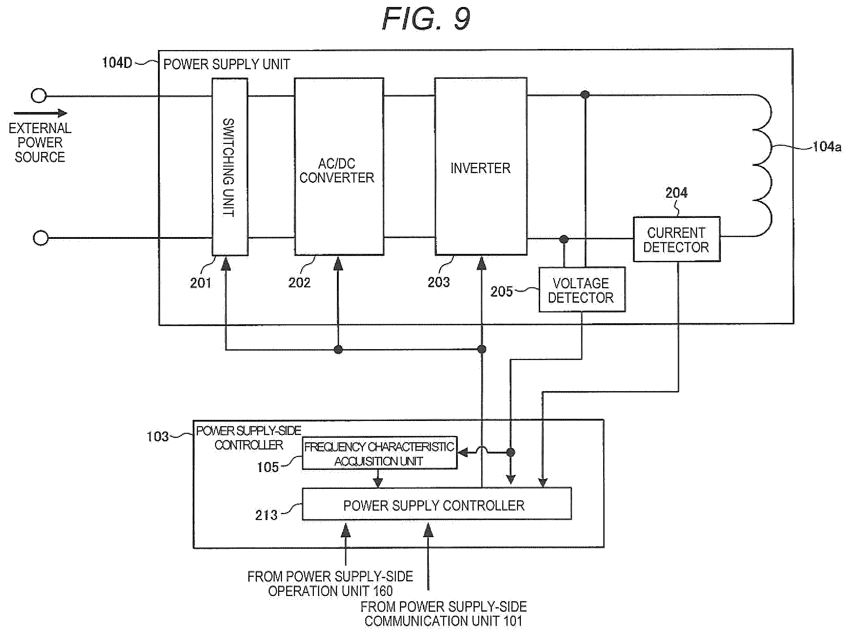

FIG. 9 is a block diagram illustrating configurations of a power supply unit and a power supply-side controller in Modification example 4 of the power feed device according to the present embodiment.

In power supply unit 104D illustrated in FIG. 9, voltage detector 205 is not provided between AC/DC converter 202 and inverter 203, but rather provided between inverter 203 and power supply coil 104a. The voltage value detected in voltage detector 205 is output to frequency characteristic acquisition unit 105.

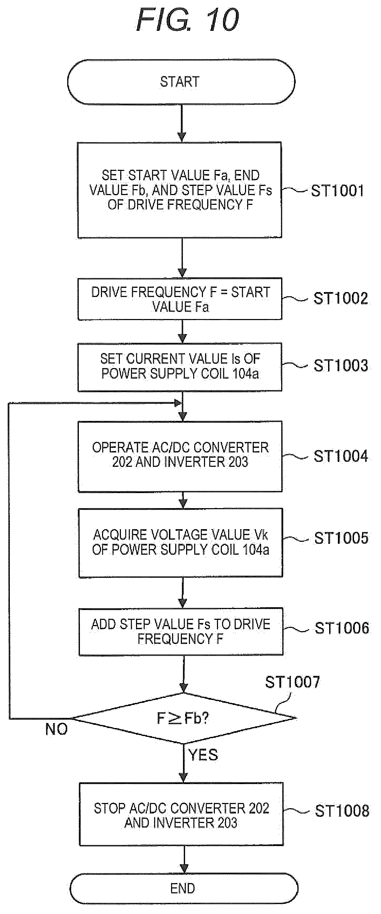

Here, using Modification example 4, a method for acquisition of frequency characteristics of the voltage value applied to power supply coil 104a by controlling power supply coil 104a to be a predetermined current value (constant current value) will be described with reference to FIG. 10.

FIG. 10 is a flowchart illustrating a method for acquisition of frequency characteristics at a time of preliminary power supply in Modification example 4 according to the present embodiment.

First, power supply controller 213 acquires and sets start value Fa, end value Fb, and step value Fs of drive frequency F, that are pre-set drive frequency information (step ST1001).

Next, power supply controller 213 sets start value Fa as drive frequency F (step ST1002).

Next, power supply controller 213 sets the current value (effective value) Is of the power that is supplied to power supply coil 104a (step ST1003).

Next, power supply controller 213 operates AC/DC converter 202 and inverter 203 at drive frequency Fa such that the current effective value supplied to power supply coil 104a becomes the constant current value Is (step ST1004).

Next, voltage detector 205 detects the voltage value (specifically, a voltage value applied to power supply coil 104a) Vk, and frequency characteristic acquisition unit 105 acquires the detected voltage value Vk (step ST1005).

Next, power supply controller 213 adds step value Fs to drive frequency F (step ST1006).

Next, power supply controller 213 determines whether or not drive frequency F is end value Fb or more (step ST1007).

When drive frequency F is less than end value Fb (step ST1007: NO), power supply controller 213 returns to the process of step ST1004.

Meanwhile, when drive frequency F is end value Fb or more (step ST1007: YES), power supply controller 213 stops inverter 203 (step ST1008).

By a loop process of steps ST1004 to ST1007, frequency characteristic acquisition unit 105 can acquire the data of a plurality of voltage values Vk between the drive frequencies Fa and Fb at a small step interval Fs. These pieces of data become the frequency characteristics data of the voltage value Vk.

Since the relationship between the frequency characteristics of the transmission efficiency and the frequency characteristics of the voltage value Vk of the power supply coil are the same as the relationship described in the embodiment described above, it is also possible to acquire the frequency characteristics of the transmission efficiency between power supply unit 104 and power receiving unit 154 from the frequency characteristics of the voltage value Vk.

<Modification example 5>

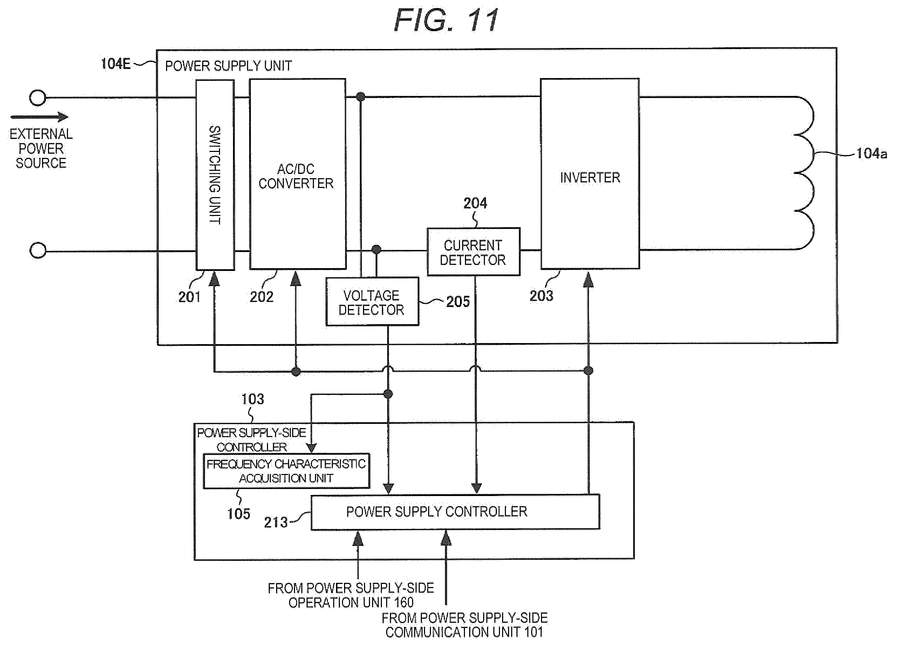

FIG. 11 is a block diagram illustrating configurations of a power supply unit and a power supply-side controller in Modification example 5 of the power feed device according to the present embodiment.

In power supply unit 104E illustrated in FIG. 11, current detector 204 is not provided between inverter 203 and power supply coil 104a, but rather is provided between AC/DC converter 202 and inverter 203. Further, in power supply unit 104E in FIG. 11, voltage detector 205 is provided between AC/DC converter 202 and inverter 203.

The voltage value detected by voltage detector 205 is input to frequency acquisition unit 105.

In this case, power supply controller 213 controls power supply unit 104 such that the output current of AC/DC converter 202 becomes a predetermined voltage (for example, an effective value is constant), by varying the drive frequency of inverter 203. Then, frequency characteristic acquisition unit 105 acquires the frequency characteristics of the output voltage of AC/DC converter 202. It is also possible to obtain the frequency characteristics of the transmission efficiency between power supply unit 104 and power receiving unit 154 from the frequency characteristics.

It is assumed that the supply start signal is input from power supply-side operation unit 160 to power supply-side controller 103 in the embodiment described above and the respective modification examples, but the supply start signal may be input from vehicle-side communication unit 155 to power supply-side controller 103 through power supply-side communication unit 101.

INDUSTRIAL APPLICABILITY

A power feed device and a method for acquisition of frequency characteristics according to the present invention can be applied to, for example, a wireless power supply system for a vehicle.

REFERENCE MARKS IN THE DRAWINGS

| 103 | power supply-side controller |
| 104 | power supply unit |
| 104a | power supply coil |
| 105 | frequency characteristic acquisition unit (acquisition unit) |
| 140 | power feed device |
| 201 | switching unit |
| 202 | AC/DC converter |
| 203 | inverter (power supply unit) |
| 204 | current detector |
| 205 | voltage detector |
| 213 | power supply controller |

**Claims**

1. A power feed device comprising:power feed device comprising:

   a power supply coil for supplying power to an external power reception coil by electromagnetic action;
   a power supply unit for supplying an alternating current (AC) power to the power supply coil, while varying a drive frequency; and
   an acquisition unit for acquiring frequency characteristics of a current value associated with a current flowing through the power supply coil, or a voltage value associated with a voltage applied to the power supply coil at a time when receiving the supplied AC power.

2. The power feed device of Claim 1, further comprising:

   a calculator for calculating frequency characteristics of transmission efficiency between the power supply coil and the power reception coil, based on the frequency characteristics acquired by the acquisition unit.

3. The power feed device of Claim 2, wherein the calculator calculates the frequency characteristics of the transmission efficiency, without using data of power that the power reception coil receives.

4. The power feed device of any one of Claims 1 to 3, further comprising:

   a calculator that specifies a maximum frequency, among the frequency characteristics acquired by the acquisition unit, as a resonance frequency between the power reception coil and the power supply coil.

5. The power feed device of any one of Claims 1 to 4, wherein the current value associated with the current flowing through the power supply coil is a value of a current flowing through the power supply coil, an input current value of an AC/DC converter that converts electrical energy supplied from an external AC power source into direct current (DC) electrical energy and supplies the DC electrical energy to the power supply unit, or an output current value of the AC/DC converter.

6. The power feed device of Claim 5, wherein the acquisition unit acquires the frequency characteristics of the value of the current flowing through the power supply coil, and the input current value of the AC/DC converter, or the output current value of the AC/DC converter, at a time when controlling a voltage value associated with a voltage applied to the power supply coil so as to be a predetermined value.

7. The power feed device of Claim 6, wherein the acquisition unit acquires the frequency characteristics of the value of the current flowing through the power supply coil at a time when controlling the voltage value associated with the voltage applied to the power supply coil so as to be a predetermined value.

8. The power feed device of Claim 6, wherein the acquisition unit acquires the frequency characteristics of the input current value of the AC/DC converter at a time when controlling the input voltage value of the AC/DC converter so as to be a predetermined value.

9. The power feed device of Claim 6, wherein the acquisition unit acquires the frequency characteristics of the output current value of the AC/DC converter at a time when controlling the output voltage value of the AC/DC converter so as to be a predetermined value.

10. The power feed device of any one of Claims 1 to 4,

wherein the voltage value associated with the voltage to be applied to the power supply coil is a voltage value of a voltage applied to the power supply coil, or an output voltage value of an AC/DC converter that converts electrical energy supplied from an external AC power source into direct current (DC) electrical energy and supplies the DC electrical energy to the power supply unit.

11. The power feed device of Claim 10, wherein the acquisition unit acquires the frequency characteristics of the voltage value of the voltage applied to the power supply coil, or the output voltage value of the AC/DC converter at a time when controlling a current value associated with a current flowing through the power supply coil so as to be a predetermined value.

12. The power feed device of Claim 11, wherein the acquisition unit acquires the frequency characteristics of the voltage value applied to the power supply coil at a time when controlling the current of the power supply coil so as to be a predetermined value.

13. The power feed device of Claim 11, wherein the acquisition unit acquires the frequency characteristics of the output voltage value of the AC/DC converter at a time when controlling the output current of the AC/DC converter so as to be a predetermined value.

14. A method for acquisition of frequency characteristics comprising:

supplying AC power to a power supply coil that supplies power to an external power reception coil, by electromagnetic action, while varying a drive frequency; and
acquiring frequency characteristics of a current value associated with a current flowing through the power supply coil, or a voltage value associated with a voltage applied to the power supply coil, at a time when receiving the supplied AC power.

15. The method for acquisition of frequency characteristics of Claim 14, further comprising:

calculating frequency characteristics of transmission efficiency between the power supply coil and the power reception coil, based on the acquired frequency characteristics.

16. The method for acquisition of frequency characteristics of Claim 14 or 15, further comprising:

specifying a local maximum frequency, among the acquired frequency characteristics, as a resonance frequency between the power supply coil and the power reception coil.

## FIG. 1

10

150

151 VEHICLE-SIDE OPERATION UNIT

153 VEHICLE-SIDE CONTROLLER

152 STORAGE BATTERY

160 POWER SUPPLY-SIDE OPERATION UNIT

155 VEHICLE-SIDE COMMUNICATION UNIT

154A: POWER RECEPTION COIL

154: POWER RECEIVING UNIT

101 POWER SUPPLY-SIDE COMMUNICATION UNIT

104A: POWER SUPPLY COIL

103

104: POWER SUPPLY UNIT

140: POWER FEED DEVICE

POWER SUPPLY-SIDE CONTROLLER

g

EP 3 018 796 A1

FIG. 2

EP 3 018 796 A1

## FIG. 3

START

SET START VALUE Fa,
END VALUE Fb, AND
STEP VALUE Fs OF DRIVE F — ST401

DRIVE FREQUENCY F
= START VALUE Fa — ST402

SET VOLTAGE VALUE Vs — ST403

OPERATE AC/DC
CONVERTER 202 AND
INVERTER 203 — ST404

ACQUIRE CURRENT VALUE Ik OF
POWER SUPPLY COIL 104a — ST405

ADD STEP VALUE Fs TO DRIVE
FREQUENCY F — ST406

ST407

$F \geq Fb$?

NO

YES

STOP AC/DC CONVERTER 202
AND INVERTER 203 — ST408

END

# FIG. 4

```
        ┌──────────────────────┐
        │        START         │
        └──────────────────────┘
                   │
                   ▼
    ┌─────────────────────────────┐
    │   SET START VALUE Fa,        │
    │   END VALUE Fb, AND          │────  ST601
    │   STEP VALUE Fs OF           │
    │   DRIVE FREQUENCY F          │
    └─────────────────────────────┘
                   │
                   ▼
    ┌─────────────────────────────┐
    │   DRIVE FREQUENCY F          │────  ST602
    │   = START VALUE Fa           │
    └─────────────────────────────┘
                   │
                   ▼
    ┌─────────────────────────────┐
    │   ACTIVATE AC/DC CONVERTER   │────  ST603
    │   202 AND INVERTER 203       │
    └─────────────────────────────┘
                   │
                   ▼
    ┌─────────────────────────────┐
    │   ACQUIRE CURRENT VALUE Ik   │
    │   AND CALCULATE SUPPLYING    │────  ST604
    │   POWER Ws                   │
    └─────────────────────────────┘
                   │
                   ▼
    ┌─────────────────────────────┐
    │   ADD STEP VALUE Fs TO DRIVE │────  ST605
    │   FREQUENCY F                │
    └─────────────────────────────┘
                   │                      ST606
                   ▼
              ◇─────────────◇
     NO       │   F ≥ Fb?   │
    ◄─────────◇─────────────◇
                   │
                  YES
                   ▼
    ┌─────────────────────────────┐
    │   STOP POWER SUPPLY 201      │────  ST607
    │   AND INVERTER 203           │
    └─────────────────────────────┘
                   │
                   ▼
        ┌──────────────────────┐
        │         END          │
        └──────────────────────┘
```

# FIG. 5

FIG. 6

## FIG. 7

EXTERNAL POWER SOURCE

104B

SWITCHING UNIT

201

VOLTAGE DETECTOR

205

CURRENT DETECTOR

204

AC/DC CONVERTER

202

INVERTER

203

104a

103

POWER SUPPLY-SIDE CONTROLLER

FREQUENCY CHARACTERISTIC ACQUISITION UNIT

105

213

POWER SUPPLY CONTROLLER

FROM POWER SUPPLY-SIDE OPERATION UNIT 160

FROM POWER SUPPLY-SIDE OPERATION UNIT 101

EP 3 018 796 A1

18

# FIG. 8

EP 3 018 796 A1

## FIG. 9

# FIG. 10

```
                    START

                      │
                      ▼
        ┌─────────────────────────────┐
        │ SET START VALUE Fa, END      │
        │ VALUE Fb, AND STEP VALUE Fs  │──── ST1001
        │ OF DRIVE FREQUENCY F         │
        └─────────────────────────────┘
                      │
                      ▼
        ┌─────────────────────────────┐
        │ DRIVE FREQUENCY F = START    │──── ST1002
        │ VALUE Fa                     │
        └─────────────────────────────┘
                      │
                      ▼
        ┌─────────────────────────────┐
        │ SET CURRENT VALUE Is OF      │──── ST1003
        │ POWER SUPPLY COIL 104a       │
        └─────────────────────────────┘
                      │
                      ▼
        ┌─────────────────────────────┐
        │ OPERATE AC/DC CONVERTER      │──── ST1004
        │ 202 AND INVERTER 203         │
        └─────────────────────────────┘
                      │
                      ▼
        ┌─────────────────────────────┐
        │ ACQUIRE VOLTAGE VALUE Vk     │──── ST1005
        │ OF POWER SUPPLY COIL 104a    │
        └─────────────────────────────┘
                      │
                      ▼
        ┌─────────────────────────────┐
        │ ADD STEP VALUE Fs TO DRIVE   │──── ST1006
        │ FREQUENCY F                  │
        └─────────────────────────────┘
                      │
                      ▼         ST1007
                 ◇ F ≧ Fb? ◇
         NO                    YES
                      │
                      ▼
        ┌─────────────────────────────┐
        │ STOP AC/DC CONVERTER 202     │──── ST1008
        │ AND INVERTER 203             │
        └─────────────────────────────┘
                      │
                      ▼
                     END
```

21

## FIG. 11

EP 3 018 796 A1

## INTERNATIONAL SEARCH REPORT

| International application No. |
|---|
| PCT/JP2014/003297 |

### A. CLASSIFICATION OF SUBJECT MATTER
*H02J17/00*(2006.01)i, *B60L11/18*(2006.01)i, *H02J7/00*(2006.01)i

According to International Patent Classification (IPC) or to both national classification and IPC

### B. FIELDS SEARCHED

Minimum documentation searched (classification system followed by classification symbols)
H02J17/00, H02J7/00-7/12, H02J7/34-7/36, B60L11/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
Scopus

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2010-136464 A (Casio Computer Co., Ltd.),<br>17 June 2010 (17.06.2010),<br>abstract; paragraphs [0010] to [0012], [0014],<br>[0015], [0020] to [0038], [0053] to [0056],<br>[0059] to [0067]; fig. 1 to 7<br>(Family: none) | 1,4-7,14-16<br>2,3,8-13 |
| Y | WO 2012/165242 A1 (Nissan Motor Co., Ltd.),<br>06 December 2012 (06.12.2012),<br>paragraphs [0023] to [0027], [0042], [0057],<br>[0062]; fig. 1, 2<br>& JP 2012-249407 A    & US 2014/0103871 A1<br>& EP 2717429 A1    & CN 103563216 A<br>& MX 2013011710 A | 2,3,8-13 |

☒ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 September, 2014 (05.09.14) | 16 September, 2014 (16.09.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

International application No.

PCT/JP2014/003297

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2012-65477 A  (Toshiba Corp.),<br>29 March 2012 (29.03.2012),<br>paragraphs [0019] to [0026]; fig. 2, 3<br>(Family: none) | 10-13 |
| A | JP 2008-263710 A  (Olympus Corp.),<br>30 October 2008 (30.10.2008),<br>paragraphs [0064] to [0095]; fig. 6 to 8<br>(Family: none) | 1-16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011142769 A